**Europäisches Patentamt**

**European Patent Office**

**Office européen des brevets**

(19)

(11)  **EP 1 002 239 B1**

(12) **EUROPÄISCHE PATENTSCHRIFT**

(45) Veröffentlichungstag und Bekanntmachung des Hinweises auf die Patenterteilung:
**17.04.2002   Patentblatt 2002/16**

(51) Int Cl.$^7$: **G01S 13/34**

(21) Anmeldenummer: **98946287.4**

(22) Anmeldetag: **06.08.1998**

(86) Internationale Anmeldenummer:
**PCT/EP98/04916**

(87) Internationale Veröffentlichungsnummer:
**WO 99/08128 (18.02.1999 Gazette 1999/07)**

(54) **RADAR-ENTFERNUNGSMESSEINRICHTUNG**

RADAR DISTANCE MEASURING DEVICE

DISPOSITIF PERMETTANT DE MESURER LA DISTANCE D'UN RADAR

(84) Benannte Vertragsstaaten:
**DE FR GB IT**

(30) Priorität: **11.08.1997   DE 19734713**

(43) Veröffentlichungstag der Anmeldung:
**24.05.2000   Patentblatt 2000/21**

(73) Patentinhaber: **Mikrowellen-Technologie Und Sensoren GmbH
85521 Ottobrunn (DE)**

(72) Erfinder: **HÖHNE, Felix
D-85609 Aschheim (DE)**

(74) Vertreter: **Schneider, Michael et al
HAMMONDS,
Rechtsanwälte/Patentanwälte,
Zweibrückenstrasse 17
80331 München (DE)**

(56) Entgegenhaltungen:
**EP-A- 0 425 006          EP-A- 0 647 857
EP-A- 0 730 166**

**Beschreibung**

Die Erfindung betrifft eine Radar-Entfernungsmeßeinrichtung mit einem ein frequenzmoduliertes, kontinuierliches Hochfrequenzsignal über eine Antenne auf ein in der zu bestimmenden Entfernung gelegenes Objekt richtenden Sender, mit einer vom Sender abgeleitete Signale einerseits und über die Antenne bzw. eine weitere Antenne empfangene Echosignale vom Zielobjekt andererseits mit einander kombinierenden Mischstufe, mit einer Frequenzanalyseseinrichtung zur Frequenzanalyse des Mischungsergebnisses, wobei ein erster Frequenzanalysator zur Erzeugung eines Grob-Analyseergebnisses und ein weiterer Frequenzanalysator mit einem verfeinerten Abtastschritt vorgesehen ist, sowie mit einer Anzeigeeinrichtung zur Anzeige der einer zielobjektbedingten Frequenz des Mischungsergebnisses entsprechenden Entfernung.

Bei bekannten Radar-Entfernungsmeßeinrichtungen mit sägezahnförmiger Frequenzmodulation wird durch den Frequenzhub (Differenz von oberer Frequenzgrenze und unterer Frequenzgrenze) der Frequenzmodulation des Sendesignals die Entfernungsauflösung bestimmt, welche mit dem Frequenzhub über folgende Gleichung verbunden ist:

$$\text{Entfernungsauflösung} = \text{Lichtgeschwindigkeit}/2 \cdot \text{Frequenzhub}.$$

Wird beispielsweise eine Entfernungsauflösung von 10 cm gefordert, so ist bei bekannten Radar-Entfernungsmeßeinrichtungen nach dem FMCW-Prinzip ein Frequenzhub von 1,5 GHz vorzusehen. Muß man jedoch beispielsweise wegen Bandbreitebeschränkungen aufgrund von Postzulassungsbestimmungen einen kleineren Frequenzhub wählen, so verschlechtert sich die Entfernungsauflösung entsprechend zu größeren Werten.

Aus der EP 0 425 006 ist eine Radareinrichtung mit einem ein frequenzmoduliertes, kontinuierliches Hochfrequenzsignal über eine Antenne auf ein in der zu bestimmenden Entfernung gelegenes Zielobjekt richtenden Sender, mit einer vom Sender abgeleitete Signale einerseits und über die Antenne bzw. eine weitere Antenne empfangene Echosignale vom Zielobjekt andererseits mit einander kombinierenden Mischstufe, mit einer Frequenzanalyseeinrichtung zur Frequenzanalyse des Mischungsergebnisses, wobei ein erster Frequenzanalysator zur Erzeugung eines Grob-Analyseergebnisses und ein weiterer Frequenzanalysator mit einem verfeinerten Abtastschritt vorgesehen ist, sowie mit einer Anzeigeeinrichtung zur Anzeige der einer zielobjektbedingten Frequenz des Mischungsergebnisses entsprechenden Entfernung beschrieben. Jedoch müssen mit der bekannten Vorrichtung mehrere Meßzyklen durchgeführt werden, um eine entsprechende Entfernungsauflösung zu erreichen.

In der EP-A-0 647 857 ist ein Verfahren beschrieben, welches eine Vielzahl von Meßzyklen vorsieht, um die Meßgenauigkeit bzw. die Entfernungsauflösung zu verbessern.

Durch die Erfindung soll die Aufgabe gelöst werden, eine Radar-Entfernungsmeßeinrichtung der eingangs kurz beschriebenen allgemeinen Art so auszugestalten, daß bei begrenztem Frequenzhub der Frequenzmodulation des Sendesignals eine hohe Entfernungsauflösung erzielt wird, ohne daß eine Vielzahl von Meßzyklen durchgeführt werden muß.

Diese Aufgabe wird erfindungsgemäß durch die kennzeichnenden Merkmale des anliegenden Patentanspruches 1 gelöst.

Vorteilhafte Ausgestaltungen und Weiterbildungen sind Gegenstand der dem Anspruch 1 nachgeordneten Patentansprüche, auf deren Inhalt hier ausdrücklich hingewiesen wird, ohne an dieser Stelle den Wortlaut zu wiederholen.

Es sei aber angemerkt, daß es zur vollumfänglichen Ausnützung der durch die Erfindung erzielten Vorteile bedeutsam ist, die Frequenzmodulation der Frequenz der zum Zielobjekt hin ausgestrahlten Schwingung mit äußerster Präzision durchzuführen, wobei vorzugsweise eine lineare bzw. sägezahnförmige Frequenzmodulation gewählt wird.

Diese Modulation erfolgt gemäß einer sehr zweckmäßigen Ausführungsform einer Radar-Entfernungsmeßeinrichtung der hier angegebenen Art in der Weise, daß ein Oszillator innerhalb eines dem Abtasttakt der Signalverarbeitung entsprechenden Zeitraums jeweils auf bestimmte Frequenzen hochpräzise eingeregelt wird, wobei diese Frequenzen Werte haben, die entsprechend genau auf der gewünschten Frequenzkennlinie über der Zeit, bei Sägezahnmodulation also genau auf einer Geraden, gelegen sind. Auf diesbezügliche Einzelheiten wird weiter unten näher eingegangen.

Eine weitere wichtige Verbesserung einer Radar-Entfernungsmeßeinrichtung der vorliegend angegebenen Art besteht darin, daß über die Frequenzanalyse hinaus die Phasenlage der ermittelten, zielobjektbedingten Frequenz als Ergebnis der Diskreten-Fourier-Transformation erhalten und ausgewertet wird, in dem Sinne nämlich, daß zur Ermittlung der zu messenden Entfernung nicht nur die vollen Perioden der zielobjektbedingten Frequenz des Mischergebnisses ausgezählt werden, sondern das entsprechende Vielfache der Wellenlänge noch um dem Phasenwinkel entsprechende Bruchteile der Wellenlänge ergänzt wird.

Nachfolgend werden Ausführungsbeispiele unter Bezugnahme auf die Zeichnung beschrieben. Es stellen dar:

Figur 1 ein schematisches Blockschaltbild einer Radar-Entfernungsmeßeinrichtung der hier angegebenen Art,

Figur 2 ein schematisches Blockschaltbild einer analogen Signalverarbeitungseinrichtung der Schaltung nach Figur 1,

Figur 3 ein schematisches Blockschaltbild einer digitalen Auswerteinrichtung der Schaltung nach Figur 1,

Figur 4 ein stark vereinfachtes Diagramm der Sendefrequenz in Abhängigkeit von der Zeit sowie des zeitlichen Frequenzganges von zielobjektbedingten Echosignalen,

Figur 5 ein vereinfachtes Diagramm des Frequenzspektrums des Mischungsergebnisses eines Sendesignals und eines Empfangssignals von einem idealisierten Ziel,

Figur 6 eine schematische Abbildung einer Sendeund Empfangsantenne und verschiedener, in deren Sendeund Empfangsstrahl gelegener Objekte, von denen eines das bezüglich seiner Entfernung interessierende Zielobjekt ist,

Figur 7 ein schematisches Frequenzspektrum des Mischungsergebnisses von Sende- und Empfangssignalen aufgrund einer etwa in Fig. 6 schematisch dargestellten Situation,

Figur 8 ein Diagramm, in dem der Logarithmus der Amplitude des Mischungsergebnisses von Sende- und Empfangssignalen über der Entfernung (gleichwertig zur Frequenz des Mischungsergebnisses) aufgetragen ist, um Wirkungen der Signalbeeinflussung am Ort des Senders selbst sowie den Einfluß des Abstandes des Zielobjektes vom Sender zu erläutern,

Figur 9 ein schematisches, Figur 8 entsprechendes Diagramm, welches die Amplitude des Mischungsergebnisses, in logarithymischen Maßstab über der Entfernung aufgetragen, nach analoger Signalbehandlung qualitativ darstellt, und

Figur 10 eine Kennlinie der Senderfrequenz über der Zeit zu Erläuterung der quasilinearen Frequenzmodulation.

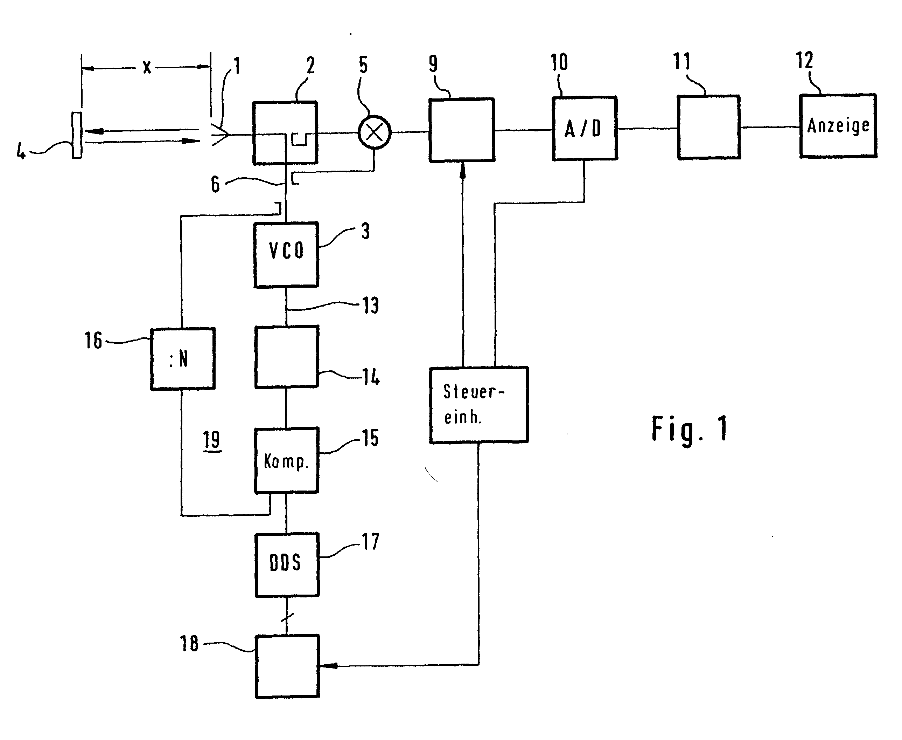

Die Radar-Entfernungsmeßeinrichtung gemäß Figur 1 enthält eine Sende-/Empfangsantenne 1, beispielsweise in Gestalt eines Hornstrahlers, der über eine Sende/Empfangsweiche 2 oder einem Koppler geeigneter Art eine frequenzmodulierte Schwingung von einem Oszillator 3 in Gestalt eines spannungsgesteuerten Oszillators zugeführt wird. Die Sende-/Empfangsantenne 1 strahlt ein Sendesignal entsprechend einem sägezahnförmigen Impuls mit linearer Frequenzmodulation beispielsweise von 24,0 GHz bis 25,5 GHz auf ein Zielobjekt 4 hin aus, das sich in der zu ermittelten Entfernung x von der Sende-/Empfangsantenne befindet.

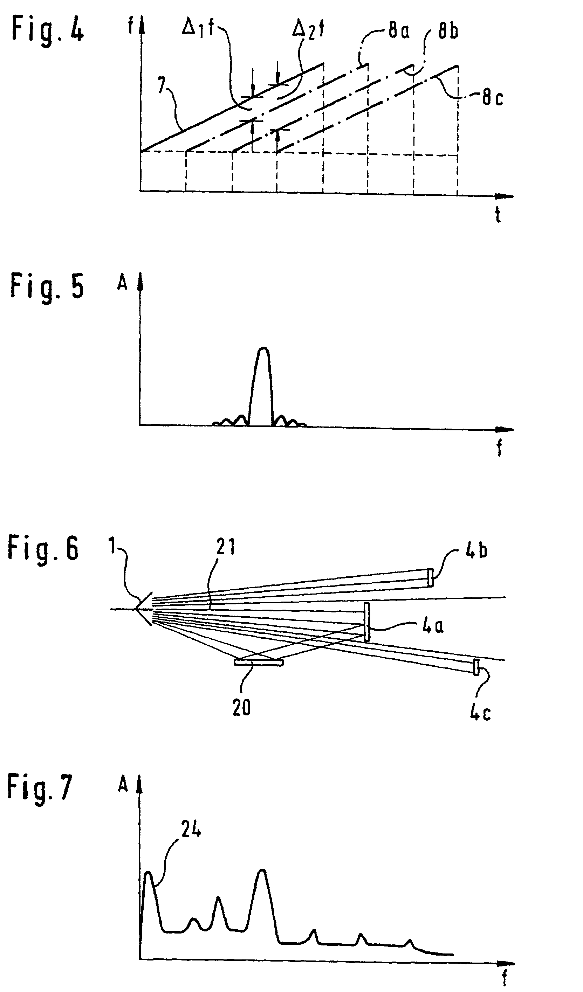

Ein vom Zielobjekt 4 reflektiertes Echosignal des Sendesignals wird von der Antenne 1 empfangen und von einem Richtungskoppler der Weiche 2 zu einem Mischer 5 hin ausgekoppelt, welcher als zweites Eingangssignal einen durch einen Richtungskoppler 6 ausgekoppelten Anteil des Sendesignales erhält. Während also der vom Richtungskoppler 6 ausgekoppelte Anteil des Sendesignals im wesentlichen unmittelbar beim Mischer 5 eintrifft, hat der vom Zielobjekt 4 reflektierte und zum Mischer 5 hin ausgekoppelte Anteil des dem Sendersignal entsprechend Echosignales eine elektrische Weglänge von 2x hinter sich. Die im Mischer 5 vorgenommene Homodyn-Überlagerung führt daher zur Differenzfrequenz am Mischerausgang, wobei diese Differenzfrequenz, wie in Figur 4 qualitativ aufgezeigt, zwischen dem durch die Kennlinie 7 gekennzeichneten Sendesignal und den durch die Kennlinien 8a, 8b, 8c ... gekennzeichneten, von Zielobjekten unterschiedlicher Entfernung reflektierten, wiederum im wesentlichen sägezahnförmig frequenzmodulierten Echosignalen zu messen ist und zu der zu ermittelnden Enternung x direkt proportional ist. Die diesbezüglichen Zusammenhänge sind dem Fachmann ohne weiteres geläufig.

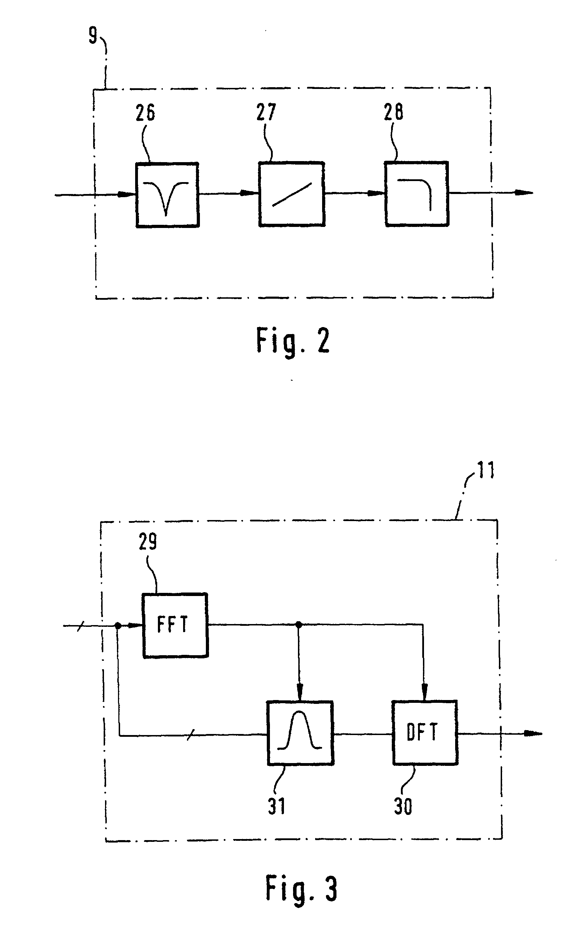

Das die Differenzfrequenz zwischen Sendesignal und Echosignal aufweisende Mischungsergebnis des Mischers 5 wird in eine analoge Signalverarbeitungseinrichtung 9 eingegeben, welche die Aufgabe hat, bestimmte inhärente Störeigenschaften der Sende- und Empfangskomponenten, bestimmte Einflüsse der Geometrie von Zielobjekt und Sende-/Empfangsantenne sowie mögliche Schwierigkeiten bei der Deutung des Meßergebnisses zu beseitigen. Hierauf wird weiter unten unter Bezugnahme auf Figur 2 eingegangen.

Das Ausgangssignal der analogen Signalverarbeitungseinrichtung 9 erreicht einen Analog/Digitalumformer 10, dessen Digitalsignale einer digitalen Frequenzanalysiereinrichtung 11 zugeführt werden. Diese Frequenz-Analysiereinrichtung erzeugt im wesentlichen ein Frequenzspektrum des von dem Analog/Digitalumsetzer 10 digitalisierten Mischungsergebnisses des Mischers 5. Dieses Frequenzspektrum kann die in Figur 5 qualitativ angegebene Gestalt haben, wenn die von der Sende-/Empfangsantenne 1 ausgestrahlte Hochfrequenzenergie beispielsweise in einem begrenzten Zeitraum linear frequenzmoduliert ist und als scharf gebündelter Strahl auf ein einziges Zielobjekt trifft. Daß in einem solchen Falle das Frequenzspektrum nach Figur 5 nicht eine einzige Frequenzlinie entsprechend der gesuchten Entfernung enthält, beruht auf der zeitlichen Begrenzung des sägezahnförmigen Impulses des Senders.

Nach Analogisierung des Ausgangssignals der digitalen Frequenzanalysiereinrichtung 11 kann dieses Signal in der Anzeigeeinrichtung 12 die gemessene Entfernung x anzeigen.

Der spannungsgesteuerte Oszillator 3 erhält ein die Frequenz seines Ausgangssignals bestimmendes Steuersignal über die Leitung 13 von einem Schleifenfilter 14 in Gestalt eines I- oder PI- oder PID-Reglers, dem eingangsseitig das Ausgangssignal eines Komparators 15 zugeführt wird. Dieser Komperator 15 erhält als ein Eingangssignal eine Schwingung oder Impulsfolge mit einer Frequenz entsprechend der Ausgangsfrequenz des spannungsgesteuerten Oszillators 3, geteilt durch den Divisor N. Das zweite Eingangssignals zu dem Komperator 15 ist eine Schwingung oder Impulsfolge mit einem Frequenzverlauf in Entsprechung zu der gewünschten Frequenzmodulation des Ausgangssignalses des spannungsgesteuerten Oszillators 3 unter Berücksichtigung des durch den mit 16 bezeichneten Frequenzteiler eingeführten Divisors, wobei dieses zweite Eingangssignal zum Komparator 15 durch direkte digitale Synthese in der DDS-Einheit 17 erzeugt wird. Von einem Prozessor 18 erhält hierzu die DDS-Einheit 17 bestimmten Augenblicksfrequenzen der Frequenzmodulation entsprechende Digitalwörter, welche zu einer hochpräzisen Vorgabe eines Frequenzsollwertes im Komparator 15 führen. Die Teile 13, 14, 15 und 16 bilden also in der Schaltung nach Figur 1 eine phasenverriegelte Schleife 19, die bewirkt, daß immer dann, wenn der Analog-/Digital-Umsetzer 10 einen digitalen Abtastwert von dem Mischungsergebnis des Mischers 5 nimmt, der spannungsgesteuerte Oszillator 3 gerade zu dieser Zeit mit hoher Genauigkeit die Sendefrequenz entsprechend dem gewünschten Frequenzgang der Frequenzmodulation aufweist. Die phasenverriegelte Schleife 19 arbeitet schnell genug, um von Abtastprobennahme zu Abtastprobennahme durch den A/D-Umsetzer 10 ihre Regelaufgabe für jeweils neue Punkte auf der präzise linearen Sägezahnkurve der Frequenzmodulation zu erfüllen.

Bei dem beispielsweise gewählten Arbeitsfrequenzbereich des spannungsgesteuerten Oszillators 3 von etwa 24 GHz nimmt der Teiler 16 eine Frequenzteilung in den MHz-Bereich vor und demgemäß liegt auch das Ausgangssignal der DDS-Einheit im MHz-Bereich. Der Komparator 15 nimmt einen Phasenvergleich bzw. Frequenzvergleich der Ausgangssignale der Bauteile 16 und 17 vor und bewirkt über den Filter 14 eine Nachregelung des Ausgangssignales des spannungsgesteuerten Oszillator 3 auf wenige Hz genau. Diese genaue Einstellung wird nach Vorgabe jeweils eines neuen Frequenz-Sollwertes durch die DDS-Einheit 17 nach einer Einschwingzeit der PPL-Schaltung 19 von wenigen Mikrosekunden erreicht, weshalb bei einer Folge von beispielsweise 1024 Abtastprobennahmen durch den A/D-Umformer 10 sich die sich auf einzelne Punkte der Kennlinie der Frequenzmodulation beziehenden Regelvorgänge der PPL-Schaltung in Zusammenwirkung mit der DDS-Einheit 17 zu einer Gesamtdauer in der Größenordnung von Millisekunden aneinanderreihen.

Die zuvor beschriebene, hochgenaue dynamische Frequenzeinstellung, insbesondere Linearisierung des Sendeoszillators macht die Vorteile der im folgenden beschriebenen Maßnahmen innerhalb der Frequenzanalyseeinrichtung 11 besonders augenfällig.

Zunächst sei jedoch auf die Ausbildung der analogen Signalverarbeitungseinrichtung 9 näher eingegangen.

Figur 6 zeigt eine den praktischen Verhältnissen angenäherte Situation zwischen einer Sende/Empfangsantenne 1 und einer Anzahl unterschiedlich großer und in unterschiedlichen Abständen von der Antenne 1 gelegener Objekte 4a, 4b, 4c ... sowie eines auf dem Weg zwischen der Antenne und den Objekten gelegenen Gegenstandes 20 der Umgebung. Die Sende/Empfangsantenne 1 erzeugt praktisch nicht einen scharf gebündelten Strahl sondern einen Strahlungsfächer 21 entsprechend einer bestimmten Richtcharakteristik des verwendeten Strahlers. Demgemäß empfängt die Sende/Empfangsantenne 1 Echosignale, welche unterschiedliche elektrische Weglängen hinter sich haben, nämlich die Echosignalen von den in unterschiedlicher Entfernung gelegenen Zielobjekten 4a bis 4c, sowie auch Echosignale, welche nach Reflexion beispielsweise am zielobjekt 4a die Antenne 1 nach weiterer Reflexion am Gegenstand 20 erreichen, woraus sich wiederum Weglängen mit bestimmten Zwischenwerten ergeben.

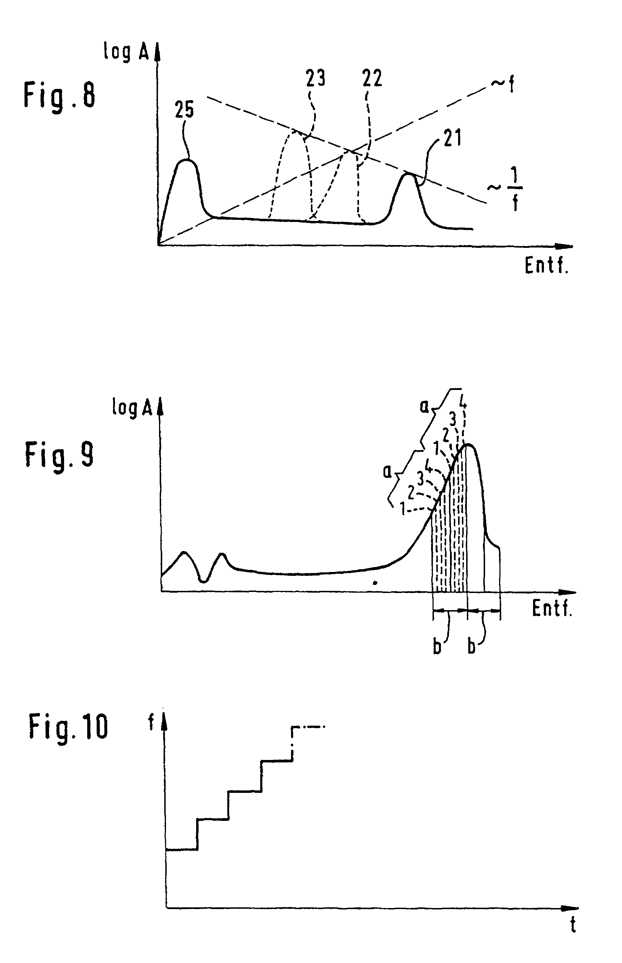

Figur 7 zeigt rein qualitativ ein Frequenzspektrum des Mischungsergebnis bei der Auswertung der Signale, wie sie bei einer Situation entsprechend Figur 6 empfangen werden. Dabei ist zu beobachten, daß Zielobjekte gleicher Größe, welche unterschiedliche Abstände von der Sende-/Empfangsantenne 1 haben, bei größer werdenden Abständen das Sendestrahlenbündel in zunehmend geringer werdendem Maße abschatten und folglich die den einzelnen Zielobjekten zugeordneten Echosignale mit größer werdendem Zielobjektabstand geringere Amplituden erzeugen. In Figur 8 ist dies für ein Zielobjekt einer vorbestimmten reflektierenden Fläche senkrecht zur Ausbreitungsrichtung der Sendesignale aufgezeigt. Ein solches Zielobjekt erzeugt in dem Diagramm von Figur 8, in welchem der Logarithmus der Amplitude über der Entfernung aufgetragen ist, in der vorbestimmten Entfernung ein mit 21 bezeichnetes Maximum. Wird das Zielobjekt näher an die Sende-/Empfangsantenne 1 herangerückt, so ergeben sich aufgrund der geometrischen Gegebenheiten jeweils mit kleiner werdenden Abstand größer werdende Amplitudenmaxima, welche in Figur 8 mit 22 und 23 bezeichnet sind.

Weiter stellt man bei praktischen Ausführungsformen der hier angegebenen Einrichtung im Frequenzspektrum des Mischungsergebnisses gemäß Figur 7 nahe dem unteren Ende des Spektrums ein ausgeprägtes Maximum fest, das in Figur 7 mit 24 bezeichnet ist und dem in der Darstellung des Logarithmus der Signalamplitude in Abhängigkeit von der Entfernung das Maximum 25 von Figur 8 entspricht.

Die Maxima 24 und 25 im Frequenzspektrum bzw. in dem Diagramm des Logarithmus der Signalamplitude über der Entfernung gemäß den Figuren 7 bzw. 8 beruhen auf Reflexionen an Übergängen des Wellenleitungsweges oder auf einer unmittelbaren Einwirkung des Sendesignals auf den Empfangskanal in der Sende-Empfangsantenne 1 oder in der Weiche 2 derart, daß diese Maxima nicht einem konkreten Zielobjekt entsprechen, dessen Entfernung zur Sende-Empfangsantenne gemessen werden soll.

Das Frequenzspektrum von Figur 7 kann außer dem Maximum 24 weitere Störmaxima im Bereich niedriger Frequenzen enthalten, die beispielsweise von Aufbauten oder Einbauten in der Umgebung verursacht sind und bei der Auswertung dieses Spektrums ebenso störend wirken wie Reflexionen an Leitungsübergängen. Nachdem diese Störmaxima zum Teil große Amplituden im Ausgang des Mischers 5 erreichen können, schränken sie die Möglichkeit der Erfassung kleiner Ziele ein, deren Maxima sie überschatten.

Zur Ausblendung solcher Störungen enthält die analoge Signalverarbeitungseinrichtung 9 im entsprechenden Bandbereich wirksame Bandsperrfilter 26, beispielsweise also ein Bandsperrfilter zur Beseitigung des im untersten Frequenzbereich des Frequenzspektrums nach Figur 7 befindlichen Störmaximums 24.

Dem Bandsperrfilter 26 der analogen Signalverarbeitungseinrichtung 9 ist ein Differenzierer 27 nachgeschaltet, welcher bewirkt, daß Signalamplituden auf Grund von Zielobjekten in großer Entfernung verstärktund Signalamplituden auf Grund von Zielobjekten in geringer werdenden Entfernungen in zunehmendem Maße abgeschwächt werden (Fiur 8, Amplitudenmaxima 21, 22, 23). Der Differenzierer 27 erzeugt eine zur Frequenz proportionale Verstärkung und hebt damit die Abschwächung der Signalamplitude mit zunehmender Zielobjektentfernung, verursacht durch die geometrischen Gegebenheiten, auf.

Schließlich folgt auf den Differenzierer 27 ein Antialiasing Filter 28, dessen obere Grenzfrequenz so gelegt ist, daß bei der Schwingungsabtastung Frequenzmehrdeutigkeiten vermieden werden.

Die Frequenzanalysiereinrichtung 11 enthält, wie in Figur 3 gezeigt, zwei Frequenzanalysatoren, nämlich im vorliegenden Ausführungsbeispiel einen ersten Frequenzanalysator zur schnellen Fourier-Transformation 29 und einen zweiten Frequenzanalysator zur Diskreten-Fourier-Transformation 30. Der FFT-Frequenzanalysator 29 empfängt die Digitalsignale vom Ausgang des A/D-Wandlers 10 und liefert ausgangsseitig als Grobanalyseergebnis die Information über die Lage desjenigen Abtastschrittes über die Abtastung des Frequenzspektrums hin, in welchem sich das zielobjektbedingte Maximum des vom FFT-Frequenzanalysator 29 erzeugten Spektrums befindet. Diese Information wird als Steuersignal für eine digitale, gruppenlaufzeitkompensierte Bandpaßfiltereinrichtung 31 verwendet, welche nun aus dem vom A/D-Wandler 10 digitalisierten Mischungsergebnis des Mischers 5 einen die interessierende zielobjektbedingte Frequenz enthaltenden und um diese Frequenz herum begrenzten Abschnitt des Mischungsergebnisses im Zeitbereich auswählt, über welchen dann mittels des DFT-Frequenzanalysators 30 eine Diskrete Fourier-Transformation mit verfeinertem Abtastschritt durchgeführt wird. Der Ausgang des FFT-Frequenzanalysators 29 dient auch zur Steuerung des DFT-Frequenzanalysators, wie in Figur 3 angedeutet ist.

Der verfeinerte Abtastschritt der Diskreten Fourier-Transformation des DFT-Frequenzanalysators kann beispielsweise eine im gewählten Abschnitt um den Faktor 100 spektral überabtastende Berechnung der Diskreten Fourier-Transformation vorsehen, wobei die Spektrallinie mit der Maximalamplitude im Frequenzspektrum mit entsprechend um den Faktor 100 gesteigerter Entfernungsauflösung ermittelt werden kann.

Im einzelnen ergeben sich in Abständen $\Delta x$ bzw. in Frequenzabständen $\Delta f$ des Mischungsergebnisses Abtastungen des kontinuierlichen Frequenzspektrums, wobei $\Delta x = c/(2 \cdot B)$ bzw. $\Delta f = 1/T_{mod}$, worin wiederum B der Bereich von der untersten bis zur obersten Frequenz der Frequenzmodulation und $T_{mod}$ die Dauer dieses Modulationshubes bedeuten.

Die schnelle Fourier-Transformation wird nach folgender Gleichung durchgeführt:

$$X_m = \Sigma(n = 0..N-1)\{X_n^{\bullet}e^{(-i \cdot 2 \cdot \pi \cdot m \cdot n/N)}\} \quad m = 0..N-1$$

Hierin bedeuten

$x_n$ reeller Ausgangswert im Zeitbereich
N Anzahl der Ausgangswerte
$X_m$ komplexer Ergebniswert im Frequenzbereich

Bei derzeit technisch möglichen Werten für B, N und $T_{mod}$ und unter Berücksichtigung von Bewegungen in der Meßumgebung sind bei bekannten Radar-Entfernungsmeßeinrichtungen der hier betrachteten allgemeinen Art nur Entfernungsauflösungen bei der Entfernungsbestimmung in der Größenordnung von mehreren Zentimetern möglich.

Nach dem hier angegebenen Gedanken erfolgt aber der Schnellen Fourier-Transformation nachgeschaltet bzw. von ihrem Ergebnis gesteuert, eine Diskrete Fourier-Transformation durch den DFT-Frequenzanalysator 30 in einem mittels der Filtereinrichtung 31 ausgewählten Frequenzbereich um die zielobjektbedingte Frequenz herum, wobei die Gleichung für diese bandselektierte und mit verfeinertem Abtastschritt durchgeführte Diskrete Fourier-Transformation folgendermaßen lautet:

$$X_{m-a(x-b)} = \Sigma_{(n=0..N-1)\{Xn_e}}^{\bullet (-i \cdot 2 \cdot \pi \cdot m/a \cdot n/N)}\}$$

$$m = a(x-b)..a(x+b)$$

Hierin bedeuten

$x_n$      reeller Ausgangswert im Zeitbereich
N      Anzahl der Ausgangswerte
$X_m$      komplexer Ergebniswert im Frequenzbereich

Figur 9 macht die Definitionen von a und b in der obigen Gleichung deutlich. Die halbe Bandbreite b wird in Einheiten der Abtastschritte der FFT-Freguenzanalyse gemessen und beträgt in Beispiel nach Figur 9 b = 2. Die Überabtastung gibt den Faktor der Verfeinerung der Abtastschritte der Diskreten Fourier-Transformation gegenüber der Schnellen Fourier-Transformation an. Sie beträgt beim Beispiel von Figur 9 a = 4. Bei praktischen Ausführungsformen kann der Faktor a bis zu 100 und darüber betragen.

Durch die bei der hier angegebenen Einrichtung vorgenommene Diskrete Fourier-Transformation erreicht man eine Entfernungsauflösung bis in den Millimeter- und Submillimeterbereich hinein bei vergleichsweise kurzen Rechenzeiten und ohne den Einsatz mehrfacher Rechenzyklen, wobei, wenn der Faktor a ausreichend groß gewählt wird, die Meßgenauigkeit durch die Rechengenauigkeit begrenzt ist. Die hochgenaue dynamische Einstellung der Frequenz des spannungsgesteuerten Oszillators 3 in der oben beschriebenen Weise in Verbindung mit der sehr präzisen Bestimmung der zielobjektbedingten Frequenz im Mischungsergebnis des Mischers 5 durch die Diskrete Fourier-Transformation in dem DFT-Frequenzanalysator 30 ermöglicht es, eine nochmalige Verfeinerung der Entfernungsauflösung vorzunehmen, da der DFT-Frequenzanalysator 30 nicht nur die zielobjektbedingte Frequenz des Mischungsergebnisses, sondern auch die Phasenlage in Gestalt des komplexen Phasenwinkels liefert.

Betrachtet man an einer festen Frequenz von beispielsweise 24 GHz das Mischungsergebnis am Ausgang des Mischers 5, so dreht sich die Phase um je 360°, wenn sich das Ziel um eine halbe Wellenlänge der Sendefrequenz in Richtung auf eine Vergrößerung der Entfernung verschiebt, die elektrische Weglänge für die hinund rücklaufende Welle also um eine Wellenlänge größer wird. Aus dem Zusammenhang der Sendefrequenz, der mit mindestens 10° Genauigkeit bestimmbaren Phase und der Frequenz des Überlagerungsignals oder Mischungsergebnisses mit der Zielentfernung läßt sich eine Genauigkeitssteigerung um 360/10 der halben Wellenlänge der Sendefrequenz erreichen. Die für diesen Vorgang erforderlichen Recheneinrichtungen können in der Darstellung von Figur 3 als Bestandteil des DFT-Frequenzanalysators 30 vorgesehen sein.

Ein Beispiel verdeutlicht diese Genauigkeitsverbesserung durch Phasenauswertung:

Die Entfernungsermittlung durch die DFT-Frequenzanalyse ergebe einen Entfernungswert von beispielsweise 10 m bei 1 mm Genauigkeit. Die Phase des Überlagerungssignales oder Mischergebnisses des Mischers 5 dreht bei einer Verschiebung des Zielobjektes von 0 m bis 10 m bei der verwendeten Sendefrequenz von 24 GHz (Wellenlänge $\lambda$=12,49 mm) insgesamt $n_{360}$ mal um 360°. Damit $n_{360}$=10.000/(12,49/2) = 1.601,281.

Die Phase dreht sich bei dieser Verschiebung des Zielobjektes von 0 m auf 10 m 1.601 mal um 360°. Zur genaueren Entfernungsbestimmung wird die Phase des Überlagerungssignals des Mischers, die durch die vorausgehende Diskrete Fourier-Transformation erhalten wurde, untersucht. Diese betrage beispielsweise 270°, was einem zusätzlichen Entfernungsanteil von

$$(270/360) \cdot \lambda/2 = 4{,}68 \text{ mm}$$

entspricht. Die gesamte Entfernung vom Ziel beträgt also $1.601 \cdot \lambda/2 + 4{,}68$ mm = 10,0029 m.

Zur Vermeidung von Sprüngen um $\lambda/2$ an den Grenzen der Abtastschritte wegen Zuordnung einer bestimmten zielobjektbedingten Frequenzlinie zu einem vorausgehenden Abtastschritt auf Grund einer Ungenauigkeit der Diskreten Fourier-Transformation können mehrere frequenzbegrenzte Diskrete Fourier-Transformationen mit unterschiedlicher Länge berechnet werden. Beispielsweise können statt 1.024 Abtastwerten durch Weglassen jeweils der ersten Abtastwerte 1.010, 1.000 (usw.) Abtastwerte verwendet werden, womit sich der Start der Sendefrequenz zu höheren Werten verschiebt. Man erhält dann die interessierende Spektrallinie in möglichst mittiger Lage zwischen dem Anfang und dem Ende eines Abtastschrittes der Diskreten Fourier-Transformation und kommt dadurch zu einer eindeutigen Phasenbestimmung.

Radar-Entfernungsmeßeinrichtungen der hier angegebenen Art erreichen bei einem Meßbereich von beispielsweise 50 m eine Entfernungsauflösung im Submillimeterbereich. Ein Anwendungsfall ist beispielsweise die Füllstandsmesung in geschlossenen Behältern. Die Auswertung der Amplitude des Überlagerungssignals gestattet zusätzlich zur Entfernungsmessung eine Deutung über die Art des Ziels, etwa Reflexionseigenschaft, Größe, Strahlungsabsorption u.dgl., was in dem Anwendungsbeispiel einer Füllstandsmessung oder Füllstandsanzeige von Bedeutung sein kann und Aussagen über Art der Behälterfüllung, Oberflächenbeschaffenheit des Füllungsspiegels u.dgl. zuläßt.

Abschließend sei darauf hingewiesen, daß in der vorliegenden Beschreibung und in den Ansprüchen zwar von einem frequenzmodulierten kontinuierlichen Hochfrequenzsignal als Sendesignal gesprochen wird, daß aber unter einem solchen kontinuierlichen Signal auch die feinstufige Modulation mit geregelten Stufenplateaus zu verstehen ist, wie sie durch den spannungsgesteuerten Oszillator 3 in Verbindung mit der PLL-Schaltung 19 und der DDS-Einheit 17 sowie dem Prozessor 18 erzeugt wird.

**Patentansprüche**

1. Radar-Entfernungsmeßeinrichtung mit einem ein frequenzmoduliertes, kontinuierliches Hochfrequenzsignal über eine Antenne (1) auf ein in der zu bestimmenden Entfernung gelegenes Zielobjekt (4) richtenden Sender, mit einer vom Sender abgeleitete Signale einerseits und über die Antenne (1) bzw. eine weitere Antenne empfangene Echosignale vom Zielobjekt andererseits miteinander kombinierende Mischstufe (5), mit einer Frequenzanalysiereinrichtung (11) zur Frequenzanalyse des Mischungsergebnisses, wobei ein erster Frequenzanalysator zur Erzeugung eines Grob-Analyseergebnisses und ein weiterer Frequenzanalysator mit einem verfeinerten Abtastschritt vorgesehen ist, sowie mit einer Anzeigeeinrichtung (12) zur Anzeige der einer zielobjektbedingten Frequenz des Mischungsergebnisses entsprechenden Entfernung, **dadurch gekennzeichnet, daß** das Grob-Analyseergebnis zur Steuerung einer Filtereinrichtung (31) dient, welche einen die zielobjektbedingte Frequenz enthaltenden, um diese herum begrenzten Abschnitt des Mischungsergebnisses im Zeitbereich auswählt, über welchen mittels des weiteren Frequenzanalysators (30), der mit der Anzeigeeinrichtung (12) gekoppelt ist, eine diskrete Fourier-Transformation mit gegenüber dem Abtastschritt des ersten Frequenzanalysators (29) verfeinertem Abtastschritt durchgeführt wird.

2. Einrichtung nach Anspruch 1, **dadurch gekennzeichnet, daß** das Hochfrequenzsignal des Senders linear frequenzmoduliert ist.

3. Einrichtung nach Anspruch 1 oder 2, **dadurch gekennzeichnet, daß** das Mischungsergebnis der Mischstufe (5) von einem Analog-/Digitalwandler (10) digitalisiert wird, daß der erste Frequenzanalysator (29) eine digitale Schnelle Fouriertransformation durchführt und daß die Filtereinrichtung (31) ein digitaler, gruppenlaufzeitkompensierter Bandpaß ist.

4. Einrichtung nach Anspruch 2 oder 3, **dadurch gekennzeichnet, daß** zwischen die Mischstufe (5) und den Analog-/Digital-Wandler (10) eine analoge Signalverarbeitungsschaltung (9) gelegt ist.

5. Einrichtung nach Anspruch 4, **dadurch gekennzeichnet, daß** die analoge Signalverarbeitungsschaltung (9) mindestens einen Bandsperrfilter (26) zur Unterdrückung von Störfrequenzen im Frequenzspektrum des Ausgangssignals des Mischers (5) enthält.

6. Einrichtung nach Anspruch 4 oder 5, **dadurch gekennzeichnet, daß** die analoge Signalverarbeitungsschaltung (9) einen Differenzierer (27) zur Verstärkung der Ausgangssignale des Mischers (5) in direkter Abhängigkeit von ihrer Frequenz enthält.

7. Einrichtung nach einem der Ansprüche 4 bis 6, **dadurch gekennzeichnet, daß** die analoge Signalverarbeitungsschaltung (9) ein Antialiasingfilter (28) enthält.

8. Einrichtung nach einem der Ansprüche 1 bis 7, **dadurch gekennzeichnet, daß** in der digitalen Frequenzanalysiereinrichtung (11) der weitere Frequenzanalysator (30) außer der Information über die zielobjekt bedingte Frequenz des Mischungsergebnisses der Mischstufe (5) ein Ausgangssignal entsprechend der Phasenlage der Schwingung entsprechend dieser Frequenz liefert, welches in einen entsprechenden Bruchteil der Wellenlängen dieser Frequenz in einer Recheneinrichtung umgerechnet und zu der aus der genannten zielobjektbedingten Frequenz errechneten Summe ganzer Wellenlänge zur Verfeinerung des Meßergebnisses hinzu addiert wird.

9. Einrichtung nach einem der Ansprüche 1 bis 8, **dadurch gekennzeichnet, daß** die Abtastprobennahme des Mischungsergebnisses der Mischstufe (5) durch den bzw. einen Analog-/Digital-Wandler (10) unter Weglassung der ersten Abtastproben in mehreren Meßzyklen mit einer geringer werdenden Anzahl von Abtastproben durchgeführt wird derart, daß die zielobjektbedingte Frequenz im Mischungsergebnis der Mischstufe (5) etwa in die Mitte zwischen den Abtastschritten der Diskreten Fourier-Transformation zu liegen kommt.

**10.** Einrichtung nach einem der Ansprüche 1 bis 9, **dadurch gekennzeichnet, daß** das frequenzmodulierte kontinuierliche Hochfrequenzsignal von einem spannungsgesteuerten Oszillator (3) erzeugt wird, dessen Abstimmspannung von einem Phasenkomparator (15) über einen Schleifenfilter (14), insbesondere in Gestalt eines I-Reglers oder eines PI-Reglers oder eines PID-Reglers, zugeführt (13) ist, wobei ein Eingangssignal zu dem Phasenkomparator (15) vom Ausgang des spannungsgesteuerten Oszillators (3) über einen Frequenzteiler (16) zugeführt ist, während das andere Eingangssignal zum Phasenkomparator (15) ein Frequenzsollwertsignal entsprechend einem dem Teilerverhältnis des Frequenzteilers (16) entsprechenden Bruchteil der Frequenz der Senderausgangsschwingung ist (PLL-Schaltung 19).

**11.** Einrichtung nach Anspruch 10, **dadurch gekennzeichnet, daß** das dem Phasenkomparator (15) zugeleitete Frequenzsollwertsignal von einer Schaltungseinheit (17) zur direkten digitalen Synthese erzeugt wird, welche von einem Prozessor (18) Digitalwörter entsprechend aufeinanderfolgenden Frequenzwerten in Abhängigkeit von der Frequenzmodulation des Senders bezieht.

**12.** Einrichtung nach Anspruch 10 oder 11, **dadurch gekennzeichnet, daß** zur linearen Frequenzmodulation des Hochfrequenzsignales dieses schrittweise und quasi stationär linear moduliert und während der Abtastschritte nachkalibriert wird.

## Claims

**1.** Radar range measuring device comprising a transmitter for directing a frequency-modulated continuous radio frequency signal via an antenna (1) onto a target object (4) placed at the range to be determined; with a mixing stage (5) for combining with one another, signals tapped from the transmitter, and, on the other hand, echo signals received from the target object via the antenna (1) or another antenna; with a frequency analysis device (11) for frequency analysis of the mixing result wherein a first frequency analyzer for creating a coarse analysis result and a second frequency analyzer with a refined sampling step are provided; and with a display device (12) for displaying the range corresponding to a target-object-specific frequency of the mixing result, **characterized in that** the coarse analysis result serves for directing a filter device (31), which selects a limited sector, which comprises the target- objective-specific frequency of the mixing result in the time limit, over which via the second frequency analyzer (30), which is coupled to the display device (12), a discrete Fourier transform is performed with a sampling step which is refined relative to the sampling step of the first frequency analyzer (29).

**2.** Device according to claim 1, **characterized in that** the radio frequency signal of the transmitter has linear frequency modulation.

**3.** Device according to claim 1 or 2, **characterized in that** the mixing result of the mixing stage (5) is digitized by an analog-to-digital converter (10), that the first frequency analyzer (29) performs a digital Fast Fourier transformation and that the filter device (31) is a digital group-delay-compensated bandpass filter.

**4.** Device according to claim 2 or 3, **characterized in that** an analog signal processing circuit (9) is placed between the mixing stage (5) and the analog-to-digital converter (10).

**5.** Device according to claim 4, **characterized in that** the analog signal processing circuit (9) contains at least one band-stop filter (26) for suppressing interference frequencies in the frequency spectrum of the output signal of the mixer (5).

**6.** Device according to claim 4 or 5, **characterized in that** the analog signal processing circuit (9) contains a differentiator (27) to amplify the output signal of the mixer (5) in direct dependence on the frequency.

**7.** Device according to any of claims 4 to 6, **characterized in that** the analog signal processing circuit (9) contains an antialiasing filter (28).

**8.** Device according to any of claims 1 to 7, **characterized in that** in the digital frequency analysis device (11) of the other frequency analyzer (30) supplies, in addition to information about the target-object-specific frequency of the mixing result of the mixing stage (5), an output signal corresponding to the phase position of the oscillation at the target-object-specific frequency, and wherein the radar range measuring device further comprises a computation device for converting the phase position into a corresponding fraction of the wavelength of the target-object-specific frequency and for adding the fraction to the sum of the whole wavelengths calculated from the target-object-specific frequency in order to refine the measurement result.

9. Device according to any of claims 1 to 8, comprising an analog-to-digital converter for sampling the mixing result, wherein the sampling is performed with omission of first samples in several measuring cycles with a decreasing number of samples such that the target-object-specific frequency in the mixing result of the mixing stage (5) comes to lie approximately mid-way between the sampling steps of the discrete Fourier transformation.

10. Device according to any of claims 1 to 9, **characterized in that** the frequency-modulated continuous radio frequency signal is generated by a voltage-controlled oscillator (3) whose tuning voltage is supplied (13) by a phase comparator (15) via a loop filter (14), specifically in the form of an I controller or a PI controller or a PID controller, one input signal to the phase comparator (15) being supplied from the output of the voltage-controlled oscillator (3) via a frequency divider (16), while the other input signal to the phase comparator (15) is a frequency setpoint-value signal corresponding to a fraction of the frequency of the transmitter output oscillation corresponding to the divider ratio of the frequency divider (16) (PLL circuit 19).

11. Device according to claim 10, **characterized in that** the frequency setpoint-value signal supplied to the phase comparator (15) is produced by a circuit unit (17) for direct digital synthesis which receives from a processor (18) digital words corresponding to consecutive frequency values in dependence on the frequency modulation of the transmitter.

12. The device according to any of claims 10 or 11, **characterized in that** for the linear frequency modulation of the radio frequency signal the latter is modulated in a stepwise and quasistationary linear manner and is recalibrated during the sampling steps.

**Revendications**

1. Dispositif de mesure de distance par radar comportant un émetteur qui dirige par le biais d'une antenne (1) un signal à haute fréquence continuellement modulé en fréquence sur un objet cible (4) se trouvant à la distance à déterminer, comprenant un étage mélangeur (5) qui combine entre eux d'une part les signaux dérivés de l'émetteur et d'autre part les signaux d'écho de l'objet cible reçus par l'antenne (1) ou par une autre antenne, comprenant un dispositif analyseur de fréquence (11) pour analyser la fréquence du résultat du mélange, un premier analyseur de fréquence étant prévu pour produire un résultat d'analyse grossier et un autre analyseur de fréquence avec une étape d'échantillonnage plus précise, et comprenant un dispositif d'affichage (12) pour afficher la distance correspondant à la fréquence relative à l'objet cible du résultat du mélange, **caractérisé en ce que** le résultat d'analyse grossier est utilisé pour commander un dispositif de filtrage (31) qui sélectionne une portion dans le temps du résultat du mélange, laquelle contient la fréquence relative à l'objet cible et est limitée autour de celle-ci, portion sur laquelle, à l'aide de l'autre analyseur de fréquence (30) qui est relié au dispositif d'affichage (12), est effectuée une transformation de Fourier discrète avec l'étape d'échantillonnage plus précise par rapport à l'étape d'échantillonnage du premier analyseur de fréquence (29).

2. Dispositif selon la revendication 1, **caractérisé en ce que** le signal à haute fréquence de l'émetteur est modulé en fréquence de manière linéaire.

3. Dispositif selon la revendication 1 ou 2, **caractérisé en ce que** le résultat du mélange de l'étage mélangeur (5) est numérisé par un convertisseur analogique/numérique (10), que le premier analyseur de fréquence (29) effectue une transformation de Fourier rapide numérique et que le dispositif de filtrage (31) est un filtre passe-bande numérique à temps de propagation de groupe compensé.

4. Dispositif selon la revendication 2 ou 3, **caractérisé en ce qu'**un circuit analogique de traitement de signal (9) se trouve entre l'étage mélangeur (5) et le convertisseur analogique/numérique (10).

5. Dispositif selon la revendication 4, **caractérisé en ce que** le circuit analogique de traitement du signal (9) comprend au moins un filtre coupe-bande (26) pour atténuer les fréquences parasites dans le spectre des fréquences du signal de sortie du mélangeur (5).

6. Dispositif selon la revendication 4 ou 5, **caractérisé en ce que** le circuit analogique de traitement du signal (9)

**EP 1 002 239 B1**

comprend un différenciateur (27) pour amplifier les signaux de sortie du mélangeur (5) directement en fonction de leur fréquence.

7. Dispositif selon l'une des revendications 4 à 6, **caractérisé en ce que** le circuit analogique de traitement du signal (9) comprend un filtre anti-repliement (28).

8. Dispositif selon l'une des revendications 1 à 7, **caractérisé en ce que** dans le dispositif numérique analyseur de fréquence (11) de l'autre analyseur de fréquence (30), outre l'information sur la fréquence relative à l'objet cible du résultat du mélange, l'étage mélangeur (5) délivre un signal de sortie correspondant à la phase de l'oscillation en fonction de cette fréquence, lequel est converti dans un dispositif de calcul en une fraction correspondante des longueurs d'onde de cette fréquence et additionné à la somme de l'ensemble des longueurs d'onde, calculée à partir desdites fréquences relatives à l'objet cible, pour affiner le résultat de la mesure.

9. Dispositif selon l'une des revendications 1 à 8, **caractérisé en ce que** l'échantillonnage du résultat du mélange de l'étage mélangeur (5) est réalisé par le ou un convertisseur analogique/numérique (10) en supprimant les premiers échantillons en plusieurs cycles de mesure avec une diminution du nombre d'échantillons de manière à ce que la fréquence relative à l'objet cible dans le résultat du mélange de l'étage mélangeur (5) se trouve à peu près au centre entre les étapes d'échantillonnage de la transformation de Fourier discrète.

10. Dispositif selon l'une des revendications 1 à 9, **caractérisé en ce que** le signal à haute fréquence continuellement modulé en fréquence est généré par un oscillateur commandé en tension (3) dont la tension d'accord est acheminée (13) par un comparateur de phases (15) par le biais d'un filtre en boucle (14), notamment sous la forme d'un régulateur I ou d'un régulateur PI ou encore d'un régulateur PID, un signal d'entrée étant acheminé au comparateur de phases (15) depuis la sortie de l'oscillateur commandé en tension (3) par le biais d'un diviseur de fréquence (16), alors que l'autre signal d'entrée acheminé au comparateur de phases (15) est un signal de valeur de consigne de la fréquence correspondant à une fraction de la fréquence de l'oscillation de sortie de l'émetteur qui correspond à l'un des rapports de division du diviseur de fréquence (16) (circuit PLL 19).

11. Dispositif selon la revendication 10, **caractérisé en ce que** le signal de valeur de consigne de la fréquence qui est acheminé au comparateur de phases (15) est généré à partir d'un circuit (17) de synthèse numérique directe qui se rapporte aux mots numériques d'un processeur (18) correspondant aux valeurs successives de la fréquence en fonction de la modulation de fréquence de l'émetteur.

12. Dispositif selon la revendication 10 ou 11, **caractérisé en ce que** pour réaliser la modulation de fréquence linéaire du signal à haute fréquence, celui-ci est modulé par phases successives et de manière linéaire puis recalibré pendant les étapes d'échantillonnage.

Fig. 1

9

26    27    28

Fig. 2

11

29

FFT

31    30

DFT

Fig. 3

**Fig. 4**

$f$

$\Delta_1 f$   $\Delta_2 f$   8a   8b

7   8c

$t$

**Fig. 5**

$A$

$f$

**Fig. 6**

1   21   4b

4a

20   4c

**Fig. 7**

$A$

24

$f$

**Fig. 8**

**Fig. 9**

**Fig. 10**